# EUROPÄISCHE PATENTSCHRIFT

(11) **EP 3 705 082 B1**
(45) Veröffentlichungstag und Bekanntmachung des Hinweises auf die Patenterteilung: **15.09.2021**
(21) Anmeldenummer: 19161119.3
(22) Anmeldetag: 06.03.2019
(51) Int. Cl.: A61C 13/15

(54) **POLYMERISATIONS- UND NACHVERGÜTUNGSGERÄT**
POLYMERIZATION AND POST-TREATMENT DEVICE
APPAREIL DE POLYMÉRISATION ET DE TRAITEMENT ULTÉRIEUR

(43) Veröffentlichungstag der Anmeldung: 09.09.2020
(73) Patentinhaber: Ivoclar Vivadent AG, 9494 Schaan (LI)
(72) Erfinder: Benz, Oliver, 9494 Schaan (LI); Geissbühler, Stefan, 4900 Langenthal (CH)
(74) Vertreter: Baronetzky, Klaus

(56) Entgegenhaltungen:
- DE-C1- 3 708 204
- JP-A- 2002 186 632
- JP-U- 3 144 409

## Beschreibung

Die Erfindung betrifft eine Polymerisations- und Nachvergütungsgerät für das Vergüten von Dentalrestaurationsteilen aus polymerisierbaren Kunststoffen, gemäß dem Oberbegriff von Anspruch 1. Insbesondere ist hier ein solches Polymerisations- und Nachvergütungsgerät angesprochen, das für das Nachvergüten der Dentalrestaurationsteile geeignet ist, die durch Stereolithographie hergestellt sind.

Untersuchungen haben gezeigt, dass das Nachvergüten oder, wie es auch genannt wird, das Nachhärten, für die Festigkeit und Qualität erzeugter Dentalrestaurationsteile entscheidend ist.

Seit langem sind daher Nachvergütungsgeräte bekannt, in die die per Stereolithographie erzeugten Dentalrestaurationsteile eingesetzt werden und der Wirkung der UV-Lichtquelle ausgesetzt werden.

Hierbei ist die Dosierung der Lichtmenge wichtig, denn eine zu intensive UV-Beaufschlagung führt zu einer Gelbfärbung und vorzeitigen Alterungen der Dentalrestaurationsteile.

Andererseits kann ein unzureichender Polymerisationsgrad aufgrund zu geringer Vergütungszeit dazu führen, dass im Bauteil, also in dem Dentalrestaurationsteil, noch nicht polymerisierte Bestandteile verbleiben.

Beim freien Radikalen besteht andererseits der Verdacht, dass sie im Mund eines Patienten krebserregend wirken können.

Eine entsprechende Studie "Assessing and Reducing the Toxicity of 3D-Printed Parts", Mr. Shirin Mesbah Oskuit et al., veröffentlicht in den Environ. Sci. Technol. Lett., 2016 3(1), Seiten 1 bis 6, veröffentlicht durch die American Chemical Society, legen dies nahe.

Andererseits ist die visuelle Begutachtung des behandelten Bauteils während der Nachvergütung oder Nachhärtung wichtig. Daher weisen Nachhärtgeräte typischerweise ein Fenster auf, dass eine Begutachtung des Bauteils erlaubt.

DE3708204 offenbart eine Behandlungskammer zur Lichtbeaufschlagung für die Dental-Technik mit einem Sichtfenster.

Gemäß den Sicherheitsvorschriften sollen die Lichtquellen abgeschaltet werden, während der Betrachter die Bauteile in Augenschein nimmt. Hiermit soll verhindert werden, dass der Betrachter durch die UV-Anteile der aufgebrachten Nachhärtstrahlung geschädigt wird.

Ferner hat man Blenden an dem Fenster angebracht, die eine unmittelbare Sicht auf den Innenraum des Nachhärtgeräts , also der Lichtkammer, blockieren. Derartige Blenden sind unergonomisch, jedoch erfoderlich, damit nicht während der Bestrahlungszeit durch ein versehentliches Blicken in die Richtung des Fensters Schäden enstehen.

Um Schäden insofern sicher auszuschließen, ist es auch vorgeschlagen worden, das Fenster in der Tür der Polymerisations- und Nachvergütungsgerät mit einem Schieber verschließbar zu machen, und die Lichtquelle lediglich dann einzuschalten, wenn der Schieber geschlossen ist.

Dies schließt zwar Schäden für den Betrachter sicher aus, ist jedoch ungünstig für die Härtung, denn am besten sollte die UV-Strahlung ununterbrochen dem Bauteil zugeleitet werden.

Daher liegt der Erfindung die Aufgabe zugrunde, ein Polymerisations- und Nachvergütungsgerät, inbesondere für Bauteile als Dentalrestaurationsteile, die aus polymerisierbaren Kunststoffen bestehen, gemäß dem Oberbegriff von Anspruch 1 zu schaffen, das eine ergonomische Handhabung der Kontrolle des Polymerisations- und Nachvergütungsgeräts erlaubt, ohne dass Gesundheitsschäden zu befürchten wären.

Diese Aufgabe wir erfindungsgemäß durch Anspruch 1 gelöst. Vorteilhafte Weiterbildungen ergeben sich aus den Unteransprüchen.

Erfindungsgemäß besonders günstig ist es, dass nunmehr ohne die Gefahr von Gesundheitsschäden auch während der Belichtung das Bauteil begutachtet werden kann. Damit entfällt die Fehlbedienung durch Blenden, kurzzeitiges Ausschalten oder die Gefährdung beim ungeschützten Betrachten der UV-Strahlung.

Erfindungsgemäß ist dies durch die Kombination mit einer spezielle Fensterscheibe realisierbar, die aus zwei Schichten besteht, nämlich zur Lichtkammer hin aus einer Schicht mit nach innen reflektierender Oberfläche und zum Betrachter hin aus einer Schicht mit einem Kantenfilter für UV-Licht, oder sogar für Blaulicht.

Erfindungsgemäß wird damit das Spektrum der emittierten und durch die Tür hindurch gelangenden Strahlung gezielt an kritischen Stellen stark reduziert. Durch die Reflektion an der Innenschicht der Fensterscheibe wird die Strahlung zum großen Teil reflektiert, so dass lediglich beispielsweise 5 bis 10% der Strahlung durch den dort vorliegenden, insofern teildurchlässigen Spiegel, hindurch gelangen.

Diese Reststrahlung wird einen Kantenfilter unterworfen, der die UV-Anteile vollständig absorbiert.

Versuche haben ergeben, dass mit dieser Methode weniger als 1% der emittierten UV-Strahlung in das Auge des Betrachters gelangen können, was einer Dosis entspricht, die deutlich geringer ist als an einer UV-Strahlung der Sonne an einem Sommertag.

Erfindungsgemäß ist die Kombination der beiden genannten Schichten besonders günstig, denn ohne die Innenschicht würde die Außenschicht so viel energiereiche UV-Strahlung absorbieren, dass sie schnell altert, erwärmt oder gar schmilzt, je nach Beaufschlagungsintensität.

Auch wenn das erfindungsgemäße Polymerisations- und Nachvergütungsgerät als solches bezeichnet ist, ist es gleichermaßen gerechtfertigt, esanstelledessen als Härtvorrichtung zu bezeichnen. Dies deshalb, da die Vorhärtung - und damit auch eine Härtung - bereits in der Stereolithographie-Vorrichtung erfolgt.

Erfindungsgemäß ist es vorgesehen, dass das von der Lichtquelle der Polymerisations- und Nachvergütungsgerät emittierte Licht in besonderer Weise gehandelt wird:
zum einem trifft es auf das Dentalrestaurationsteil, das sich in der Lichtkammer befindet, und beleuchtet dieses insofern. Die Lichtquelle emittiert typischerweise sowohl sichtbares Licht als auch ultraviolettes Licht, mit einer Wellenlängenkurve, die von 380 nm bis 510 nm reicht und beispielsweise zwei Emissionsmaxima bei etwa 410 und etwa 470 nm hat.

Ein Großteil der Polymerisation, also der Nachhärtung oder Nachvergütung, wird beispielsweise über den ultravioletten oder nahe ultravioletten Bereich der Emissionskurve geleistet. Dies ist selbstverständlich Materialabhängig, wobei andere Wellenlängen auch denkbar sind. Dieser ist insofern besonders energieintensiv.

Die Lichtkammer ist innen verspiegelt und stellt dadurch sicher, dass das von der Lichtquelle emittierte Licht von allen Seiten auf die Dentalenrestaurationsteile oder auf das Dentalrestaurationsteil trifft. Das emittierte Licht trifft daher auch auf die Tür, die eine der sechs Wände der rechteckigen Lichtkammer einnimmt.

Auch die Tür ist innen, also zur Lichtkammer hin, verspiegelt. Sie weist erfindungsgemäß ein Fenster einer Fensterscheibe auf, das es ermöglicht, das Dentalrestaurationsteil oder die Dentalrestaurationsteile zu betrachten, und auch den Lichteinfall auf diese.

Das Fenster und die zugehörige Fensterscheibe ist erfindungsgemäß in besonderer Weise ausgebildet. Die Tür weist einen Türschenkel auf, der an dem Türrahmen schwenkbeweglich belagert ist und nimmt etwa in der horizontalen und in der vertikalen Mitte das Fenster auf.

Das Fenster hat eine Breite von etwa 5cm, beispielsweise zwischen 4 und 10cm, und eine Höhe von etwa 20cm, beispielsweise zwischen 12 und 35cm.

Das Fenster ist insofern ein hochkant angeordnetes Rechteck mit einem Höhen/Breiten-Verhältnis zwischen 2 zu 1 und 10 zu 1.

Die Fensterscheibe des Fensters ist von außen betrachtet tiefliegend ausgebildet, also der Innenseite der Tür benachbart.

Diese Anordnung hat den Vorteil, dass von außen auftreffende Gegenstände ab einem gewissen Durchmesser die Fensterscheibe nicht berühren können, sondern vom Türschenkel abgehalten werden.

Erfindungsgemäß ist es unkritisch, wenn für längere Zeit kontinuierlich durch das Fenster in die Lichkammer geblickt wird. Schutzbrillen sind bei der Erfindung nicht mehr notwendig.

Erfindungsgemäß ist die Fensterscheibe aus zwei Schichten ausgebildet, wobei diese Angabe zwei hier nicht einschränkend zu verstehen ist, sondern im Sinne von mindestens zwei Schichten.

Die innere Schicht, also die der Lichtkammer zugewandte Schicht, ist mindestens nach innen reflektierend. Sie kann beispielsweise eine Glasscheibe sein, die mit einem reflektierenden Material wie Aluminium bedämpft ist. Diese Reflektionseigenschaften sind so gewählt, dass das Verhältnis des reflektierten zu den transmittierten Licht deutlich größer als eins ist. Beispielsweise wird vom auftreffenden Licht 90 bis 95% reflektiert und 5 bis 10% durchgelassen.

Typischerweise hat eine solche Bedampfung eine nichtlineare Transmissionskennlinie, so dass also sowohl sichtbares Licht als auch ultraviolettes Licht in ungleichen Teilen durchgelassen wird.

Auf der inneren Schicht ist eine äußere Schicht angebracht, bevorzugt ohne dazwischen liegende Luftpolster. Diese Anordnung hat den Vorteil, dass dort nicht zwei, sondern lediglich eine Mediengrenze vorliegt, so dass von der inneren Schicht zur äußeren Schicht gelangendes Licht dort lediglich einmal gebrochen wird.

Die äußere Schicht besteht bevorzugt aus transparentem und eingefärbtem Kunststoff, der UV-Licht nahezu vollständig und Blaulicht in einem gewissen Anteil bzw. nahezu vollständig wegfiltert. Am Ende tritt mehrheitlich Weiss- und Oranglicht aus.

Insofern hat diese Kunststoffschicht die Wirkung eines Kantenfilters.

Auch ist günstig, dass die aus Kunststoff bestehende äußere Schicht einen Splitterschutz für die bevorzugt aus Glas bestehende innere Schicht bildet. Etwaige dort auftreffende spitze Gegenstände treffen auf die weniger spröde Kunststoffschicht, so dass das Beschädigungsrisiko gering ist.

In einer modifizierten Ausgestaltung ist eine Fensterscheibe innen, also zur Lichtkammer hin, reflektierend, z.B. mit Aluminium bedampft, und außen mit einem Kantenfilter bedampft.

Die Fensterscheibe kann aus Kunststoff und/oder aus Verbundglas oder aus Panzerglas bestehen. Sie kann 2 bis 10 mm dick sein.

Es ist bevorzugt, dass der Brechungsindex der Schichten der Fensterscheibe sich um weniger als 50%, bevorzugt weniger als 25%, voneinander unterscheidet.

Günstig ist es auch, das die Fensterscheibe in einem Fensterrahmen aufgenommen ist. Dieser ist nach der Art einer Vertiefung innenseitig des Türschenkels vorgesehen und nimmt die Fensterscheibe so auf, das die Innenseite des Türschenkels bündig ist. Insofern entspricht die Tiefe der Vertiefung der Dicke der Fensterscheibe.

In erfindungsgemäß günstiger Weise ist der äußere Teil der Fensterscheibe, soweit er den Türschenkel überlappt, von einer Blende abgedeckt. Die Blende erstreckt sich über die gesamte Innenseite der Tür, abgesehen von einem Ausschnitt, der das Fenster bildet. Die Blende ist aus einem nichttransparenten Material ausgebildet, beispielsweise aus Aluminium. Bevorzugt ist ihre Innenseite jedenfalls metallisch reflektierend, so dass von der Lichtquelle emittierte Strahlung jedenfalls dort reflektiert wird. Alternativ kann die Blende auch aus Kunststoff bestehen, mit einer reflektierenden Beschichtung auf der Innenseite.

Am Übergang zwischen Türrahmen und Türschenkel ist sowohl eine elastische Dichtung als auch eine Labyrinthdichtung ausgebildet. Die elastische Dichtung ist ein umlaufendes Band aus einem Elastomer, das entweder auf der Blende oder auf dem Türrahmen ausgebildet ist. Die Labyrinthdichtung weist ein L oder ein komplizierteres Profil auf, das etwaige, die elastische Dichtung durchdringende Lichtstrahlung abfängt und absorbiert. Insofern ist die Labyrinthdichtung bevorzugt schwarz eingefärbt.

Der Türrahmen weist bevorzugt ein Gelenk auf, an dem der Türschenkel schwenkbeweglich gelagert ist. Der Schließzustand des Türschenkels ist durch Permanentmagnete gewährleistet, die entweder an dem Türrahmen oder dem Türschenkel in den Ecken angebracht sind, wobei entsprechende geeignete ferromagnetische Elemente an dem je anderem Bauteil, also dem Türrahmen oder dem Türschenkel, angebracht sind.

Weitere Vorteile, Einzelheiten und Merkmale ergeben sich aus der nachfolgenden Beschreibung eines Ausführungsbeispiel der Erfindung anhand der Zeichnung.

Es zeigen:
- Fig. 1: eine Ausführungsform eines erfindungsgemäßen Polymerisations- und Nachvergütungsgeräts mit geschlossener Tür in perspektivischer Darstellung;
- Fig. 2: die Ausführungsform gemäß Fig. 1 mit geöffneter Tür;
- Fig. 3: eine Vorderansicht des erfindungsgemäßen Polymerisations- und Nachvergütungsgeräts in der Ausführungsform gemäß Fig. 1;
- Fig. 4: eine Seitenansicht des erfindungsgemäßen Polymerisations- und Nachvergütungsgeräts gemäß Fig. 1 bis 3, mit geöffneter Tür;
- Fig. 5: eine Schnittansicht entlang der Linie V-V gemäß Fig. 3, durch die Ausführungsform der Erfindung, die hier im Übrigen dargestellt ist; und
- Fig. 6: eine Schnittansicht durch eine modifizierte Ausführungsform der Erfindung.

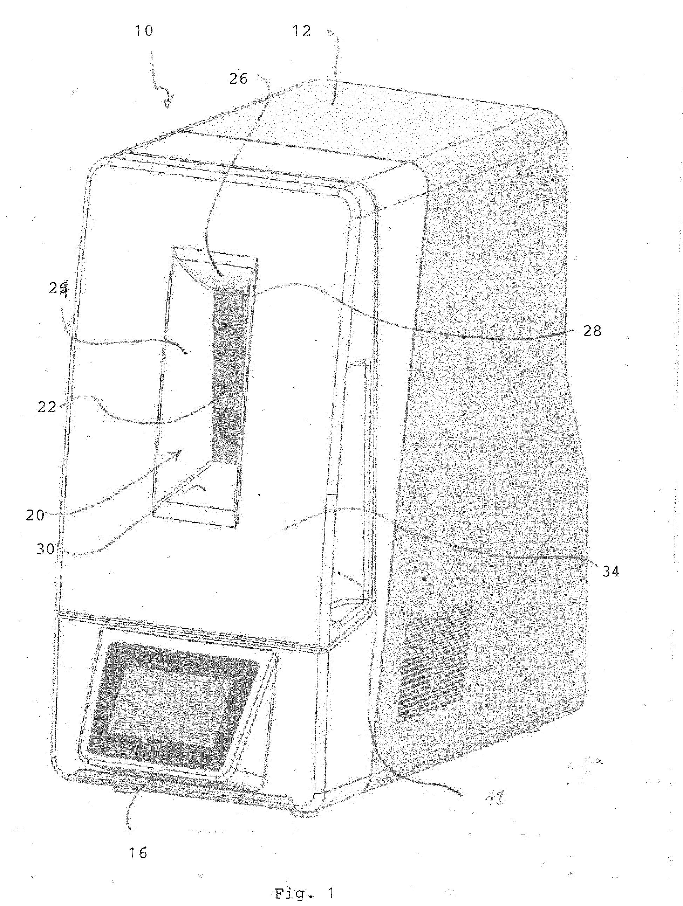

Die in Fig. 1 dargestellte Ausführungsform des Polymerisations- und Nachvergütungsgeräts 10 weist ein Gehäuse 12 mit einer Tür 14 auf. Die Tür 14 nimmt die Vorderseite des Gehäuses 12 ein, abgesehen von einem unteren Bereich, der eine Anzeige-und Bedienvorrichtung 16 trägt.

Im dargestellten Ausführungsbeispiel weist die Tür 14 eine Eingrifföffnung 18 an der rechten Seite auf. Sie ist an der linke Seite angeschlagen, und durch einen Druck über die Eingriffsöfnung 18 lässt die Tür 14 sich öffnen und gibt damit den Zugang zu einer Lichtkammer 36 in dem Polymerisations- und Nachvergütungsgerät 10 frei.

Die Tür 14 weist ferner ein Fenster 20 auf. Dieses erstreckt sich hochkant mit einem Höhen-/Breiten-Verhältnis von etwa 1 zu 4. Das Fenster 20 weist eine Fensterscheibe 22 auf, die erfindungsgemäß in besonderer Weise ausgebildet ist, wozu auch auf die nachstehenden Ausführungen verwiesen wird.

Die Fensterscheibe 22 ist von leicht konvex gekrümmten Schrägflächen 24, 26, 28 und 30 umgeben, die sich zur Vorderseite 32 der Türschenkel 34 erstrecken und sicherstellen, dass die Fensterscheibe 22 tiefliegend ausgebildet ist.

Die Fensterscheibe 22, das Fenster 20 und dementsprechend auch die zugehörigen Schrägflächen 24 bis 30 sind zentral an der Tür 14 angeordnet. Obwohl die Fensterscheibe 22 recht schmal und tiefliegend ausgebildet ist, ist ein Blick in die Innenseite des Polymerisations- und Nachvergütungsgeräts 10 auch von schräg seitlich möglich, da die Schrägflächen 24 und 28 voneinander divergieren.

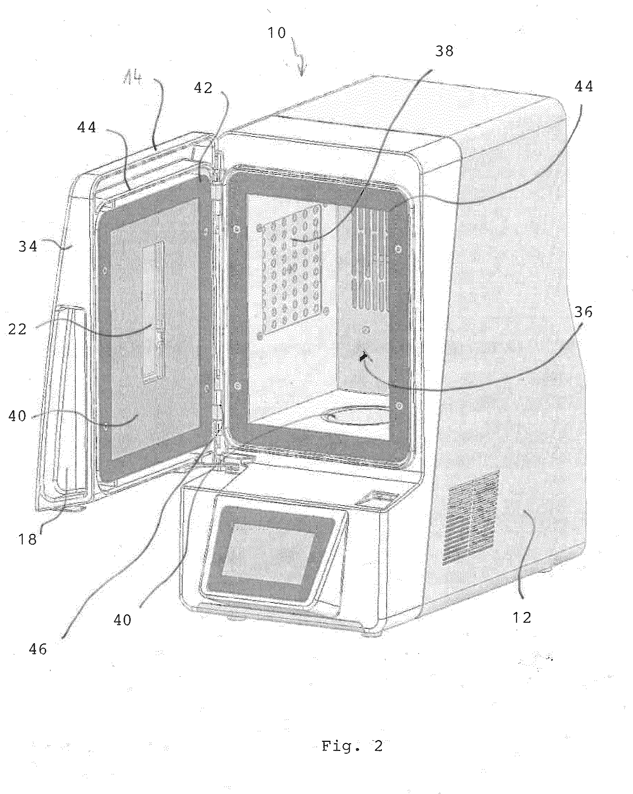

Aus Fig. 2 ist das Polymerisations- und Nachvergütungsgerät 10 bei geöffneter Tür 14 ersichtlich. Im Inneren des Polymerisations- und Nachvergütungsgeräts 10 ist eine Lichtkammer 36 mit Lichtquellen 38 realisiert. Die Lichtquelle 38 polymerisieren und härten ein Dentalrestaurationsteil, das hier nicht dargestellt ist und auf einem Drehteller 41 positioniert ist.

Wie aus Fig. 2 ersichtlich ist, ist zentral in der Tür 14 die Fensterscheibe 22 angeordnet. Sie erstreckt sich recht schmal und hochkant. Innen, also zur Lichtkammer 36 hin, ist sie von einer reflektierende Türinnenseite 40 abgedeckt. Die reflektierende Türinnenseite 40 ist innen verspiegelt, ebenso wie die übrigen Seitenwände der Lichtkamer 36.

Auf der reflektierende Türinnenseite 40 liegt am Außenrand eine schwarze und insofern maximalabsorbierende Blende 42 mit einer Dichtung aus einem Elastomer auf. Diese drückt gegen einen umlaufenden Rahmen 44 der Tür 14, wenn die Tür 14 geschlossen wird.

Zusätzlich ist außerhalb der Blende 42 eine Labyrinthdichtung 44 ausgebildet, die ebenfalls lediglich dann wirkt, wenn die Tür 14 geschlossen ist.

Wie aus Fig. 2 ersichtlich ist, ist die Tür 14 über Türgelenke 46 an dem Gehäuse 12 angelenkt.

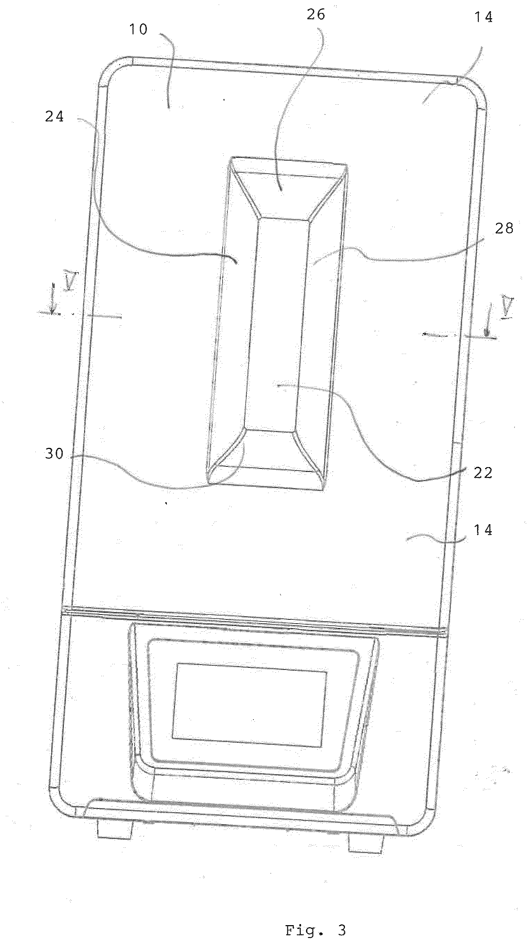

Aus Fig. 3 ist eine Vorderansicht der Tür 14 mit den Schrägflächen 24, 26, 28 und 30 ersichtlich. Im geschlossenen Zustand nimmt die Tür 14 praktisch die gesamte obere Vorderseite 32 ds Polymerisations- und Nachvergütungsgeräts 10 ein.

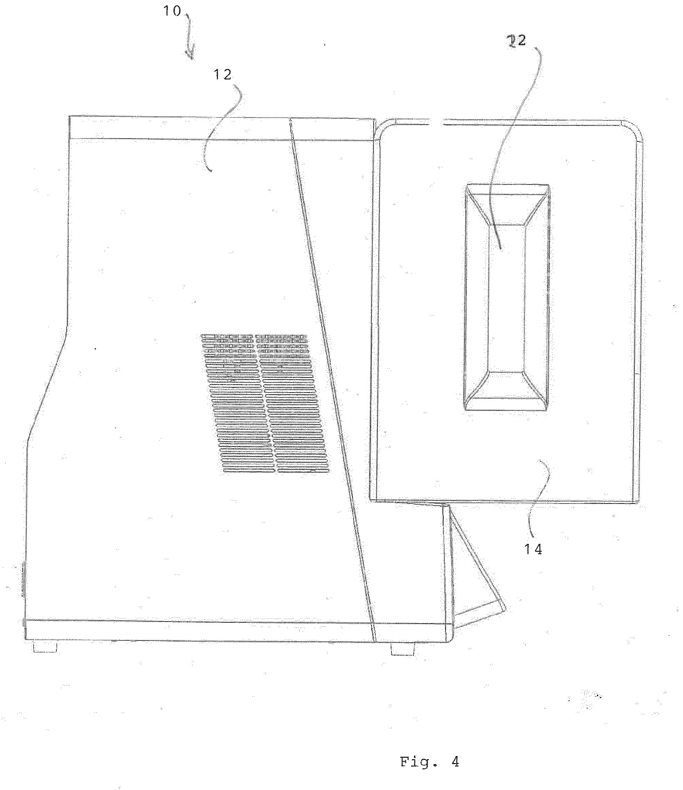

Aus Fig. 4 ist eine Seitenansicht des Polymerisations- und Nachvergütungsgeräts 10 ersichtlich, mit geöffneter Tür 14. Der Schwenkwinkel der Tür 14 ist mit an sich bekannten Anschlägen begrenzt, beispielsweise auf einen Schwenkwinkel von 90°.

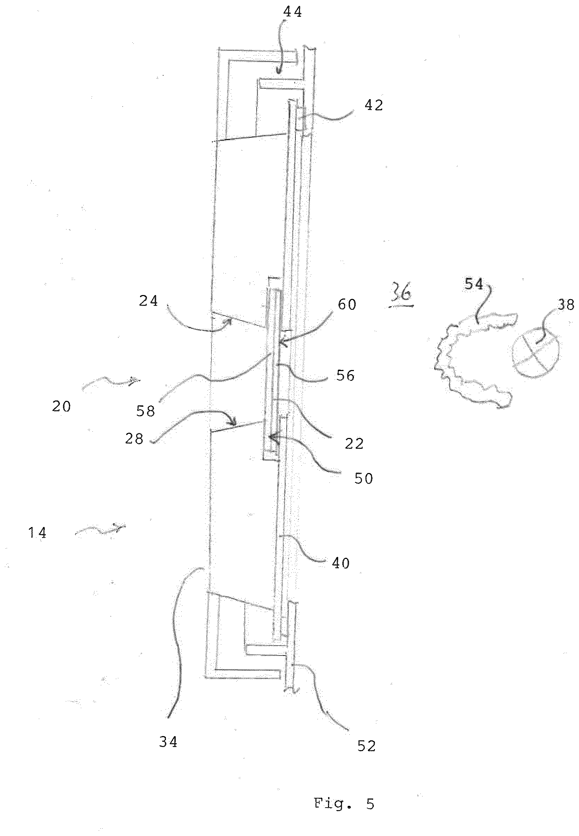

Aus Fig. 5 ist der Aufbau einer Tür mit eingebauter erfindungsgemäßen Fensterscheibe 22 im Einzelnen ersichtlich.

Die Fensterscheibe 22 ist in einer Vertiefung 50 in dem Türschenkel 34 aufgenommen. Dieser Bereich der Vertiefung ist von der reflektierenden Türinnenseite 40 abgedeckt.

Die Labyrinthdichtung 44 weist in an sich bekannter Weise einen Labyrinthgang auf, der eine Mehrfach-Umlenkung einer etwaigen Lichtstrahlung erfordert und ist durch entsprechende Gestaltung der Türschenkel 34 und des Türrahmens 52 realisiert.

Die Lichtquelle 38 beaufschlagt die Lichtkammer 36, und insbesondere auch ein Dentalrestaurationsteil 54, das in Fig. 5 schematisch angedeutet ist. Die abgegebene Lichtstrahlung wird an dem Wänden der Lichtkammer 36 und auch auf der reflektierenden Türinnenseite 40 reflektiert.

Die Fensterscheibe 22 besteht aus einer Glasschicht 56 und einer Kunststoffschicht 58. Die Glasschicht 56 ist die innenliegende Schicht und die Kunststoffschicht 58 ist die außenliegende Schicht. Die Glasschicht 56 ist auf der Innenseite mit einer Beschichtung 60 versehen, die einen geringen Teil der auftreffenden Lichtstrahlung, beispielsweise 5-10%, durchlässt und dementsprechend 90-95% reflektiert.

Die Glasschicht 56 weist eine Dicke von 2mm auf und absorbiert beispielsweise 1% der auftreffenden und durchtretenden Strahlung.

Unmittelbar angrenzend an die Glasschicht 56 ist die Kunststoffschicht 58 ausgebildet, die auch auf die Glasschicht 56 aufgespritzt sein kann. Die Kunststoffschicht 58 weist ein Kantenfilter auf, der UV-Strahlung absorbiert und sichtbares Licht zum großen Teil durchlässt. Die transparente Kunststoffschicht 58 ist insofern orange pigmentiert.

Beide Schichten sind miteinander verschraubt.

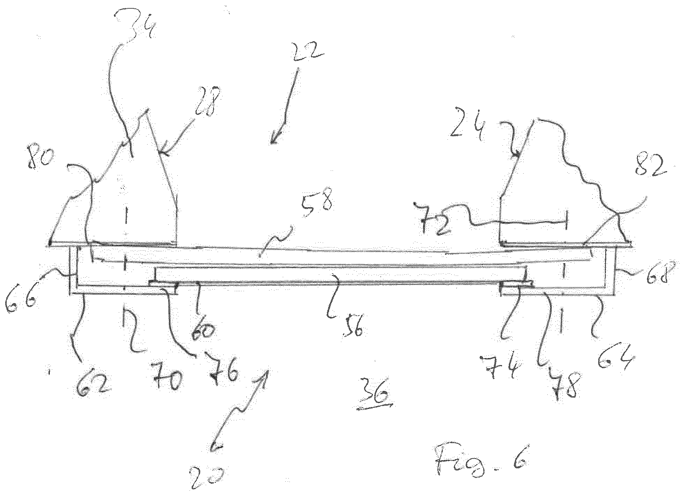

Die Ausgestaltung der Verschraubung des erfindungsgemäßen Fensters 20 in einer erfindungsgemäßen Tür 14 ist aus Fig. 6 ersichtlich.

Das Fenster 20 besteht aus einer Reflex-Scheibe 56 und einer Kantenfilter-Scheibe 58. Die Reflex-Scheibe 56 ist dem Innenraum der Härtvorrichtung 10 zugewandt und weist eine reflektierende Beschichtung 60 auf. Die Scheibe 58 ist in entspanntem Zustand leicht gewölbt. Dieser Zustand ist in Fig. 6 dargestellt.

Beidseitig der Scheibe 56 ist je ein Halter 62 und 64 vorgesehen. Dieser ist hier als Winkelblech ausgebildet, das die Scheibe 56 je zum Türschenkel 34 drückt.

Hierzu ist ein Schenkel 66 bzw. 68 an dem Türschenkel 34 abgestützt, und eine zentrale Verschraubung 70 bzw. 72 des Halters 62 bzw. 64 zieht den Halter je zum Türschenkel.

Über eine umlaufende Dichtung 74 wird der andere Schenkel 76 bzw. 78 des Halters 62 bzw. 64 auf die Scheibe 56 gedrückt.

DieScheibe 56 drückt zunächst mittig auf die Scheibe 58. Die Scheibe 58 besteht aus Kunststoff und ist weicher als die Scheibe 56. Daher verformt die Scheibe 58 sich durch den Druck und liegt dann bei zunehmendem Druck zunehmend auch außen an der Scheibe 56 an.

Wenn die Verschraubungen 70 und 72 festgezogen sind, liegen beide Scheiben vollflächig ohne Luftspalt, jedoch unter Vorspannung, aneinander an.

Die Scheibe 58 ist über Dichtungen 80 und 82 an dem Türschenkel 34 abgestützt.

Diese Art der Einspannung der Fensterscheibe 22 erlaubt auch eine gewisse thermische Belastung der Scheiben 56 und 58; wenn diese sich ausdehnen, können sie nach Belieben aneinander und an den Haltern und Türschenkel gleiten und insofern arbeiten, vorausgesetzt, es ist ausreichend Spiel eingeplant.

Auch Fertigungstoleranzen, z.B. hinsichtlich der Scheibendicke, werden kompensiert, vorausgesetzt, der Federweg der eingesetzten Dichtungen 74, 76, 80 und 82 wird nicht überschritten.

Alternativ ist es auch möglich, einen Luftspalt zwischen den Scheiben 56 und 58 vorzusehen. Dieser wirkt auch wärmedämmend, so dass diese Ausführungsform für Härtvorrichtungen 10 mit hoher Leistung besonders geeignet ist.

Alternativ ist es auch möglich, die Scheibe 56 und 58 so zu realisieren, dass die Scheibe 58 innen, also zum Innenraum 36 hin, mit einer teilreflektierenden Schicht zu versehen, die ähnlich der Beschichtung 60 ausgebildet ist und die Scheibe 56 ersetzt. In diesem Fall ist die Scheibe 58 wesentlich dicker, z.B. 6mm oder 8mm.

Diese Lösung kommt bei Härtvorrichtungen 10 mit geringerer Leistung in Betracht, denn die Ausführungsform mit der separaten Glasscheibe 56 ist jedenfalls hitzebeständiger.

Die eintretende Lichtstrahlung wird im UV-Bereich beispielsweise zu 95% absorbiert und im Bereich oberhalb von 500nm zu weniger als 10% absorbiert, also zur mehr als 90% durchgelassen.

Die Gesamt-Transmissionscharakteristik der Fensterscheibe 22 erlaubt daher eine Ansicht des Dentalrestaurationsteils 54 von außen, auch während die Lichtquelle 38 eingeschaltet ist, aber ohne dass sie für die Betrachtung aufgrund austretender UV-Strahlung gefährlich wäre.

Es versteht sich, das die Erfindung nicht auf die dargestellte Ausführung beschränkt ist. Beispielsweise kann eine zusätzliche Schicht aus Panzerglas vorgesehen sein, oder die Glasschicht 56 kann entsprechend verstärkt sein.

Die Dicke der Kunststoffschicht 58 lässt sich in weiten Bereichen an die Erfordernisse anpassen; bevorzugt ist sie im Wesentlichen gleich dick wie die Glasschicht 56.

## Patentansprüche

1. Polymerisations- und Nachvergütungsgerät, für das Vergüten, insbesondere für das Nachvergüten, von Dentalrestaurationsteilen aus polymerisierbaren Kunststoffen, insbesondere durch Stereolithographie hergestellten Dentalrestaurationsteilen, mit mindestens einer Lichtquelle, die im Bereich sichtbarer und/oder ultravioletter Wellenlängen emittiert, und, mit einer Lichtkammer, die mindestens eine Lichtquelle aufweist, und mit einer Tür zur Lichtkammer, wobei mindestens eine Wand, insbesondere die Tür (14), ein Fenster (20) mit einer Fensterscheibe (22) aufweist, die aus mindestens zwei Schichten besteht, deren der Lichtkammer (36) zugewandte Schicht (56) zu mindestens 90%, insbesondere zu etwa 95% reflektiert, **dadurch gekennzeichnet, dass** deren von der Lichtkammer (36) abgewandte Schicht (58) UV-Licht und/oder Blaulicht wegfiltert.

2. Polymerisations- und Nachvergütungsgerät nach Anspruch 1, **dadurch gekennzeichnet, dass** das Fenster (20) ein Höhen-/Breiten-Verhältnis von mind. 2 zu 1, bevorzugt von etwa 4 zu 1, hat.

3. Polymerisations- und Nachvergütungsgerät nach einem der vorhergehenden Ansprüche, **dadurch gekennzeichnet, dass** das Fenster (20) in einem Türschenkel (34) gelagert ist, der die Lichtabgabe, bei schräger Betrachtung, nach außen abschattet.

4. Polymerisations- und Nachvergütungsgerät nach einem der vorhergehenden Ansprüche, **dadurch gekennzeichnet, dass** das Fenster (20) in der Tür (14) zentral und tiefliegend gelagert ist, in einer Tiefe, die mind. 60 % der Breite des Fensters (20) entspricht.

5. Polymerisations- und Nachvergütungsgerät nach einem der vorhergehenden Ansprüche, **dadurch gekennzeichnet, dass** das Fenster (20) innen an der Tür (14) im wesentlichen bündig ist.

6. Polymerisations- und Nachvergütungsgerät nach einem der vorhergehenden Ansprüche, **dadurch gekennzeichnet, dass** das Fenster (20) mit einer lichtdichten Dichtung und/oder einer Labyrinthdichtung an der Tür (14) gelagert ist.

7. Polymerisations- und Nachvergütungsgerät nach einem der vorhergehenden Ansprüche, **dadurch gekennzeichnet, dass** eine Blende (42) an der Tür (14) innen schwarz eingefärbt oder schwarz beschichtet ist

8. Polymerisations- und Nachvergütungsgerät nach einem der vorhergehenden Ansprüche, **dadurch gekennzeichnet, dass** die der Lichtkammer (36) nähere Schicht (56) der Fensterscheibe (22) einseitig reflektiert, also zur Lichtkammer (36) hin.

9. Polymerisations- und Nachvergütungsgerät nach einem der vorhergehenden Ansprüche, **dadurch gekennzeichnet, dass** die Fensterscheibe (22) aus zwei Schichten (56, 58) besteht, die unmittelbar aufeinander aufgebracht sind, also ohne trennende Luftschicht.

10. Polymerisations- und Nachvergütungsgerät nach einem der vorhergehenden Ansprüche, **dadurch gekennzeichnet, dass** die von der Lichtkammer (36) abgewandte Schicht (58) aus einem Kunststoffmaterial besteht, das transparent ist und ein Kantenfilter für UV-Licht und/oder Blaulicht bildet.

11. Polymerisations- und Nachvergütungsgerät nach einem der vorhergehenden Ansprüche, **dadurch gekennzeichnet, dass** die Fensterscheibe (22) sowohl von der Vorderseite (32) der Tür (14) aus gesehen als auch von der Innenseite der Tür (14) aus gesehen, also von der Lichtkammer (36) aus gesehen, gegenüber der Tür (14) im Übrigen zurückspringt, an der Vorderseite (32) stärker als in der Innenseite.

12. Polymerisations- und Nachvergütungsgerät nach einem der vorhergehenden Ansprüche, **dadurch gekennzeichnet, dass** die Fensterscheibe (22) bei geschlossener Tür (14) die von der Lichtquelle (38) emittierte Strahlung, was sichtbares Licht angeht, zu mindestens 70%, bevorzugt zu mindestens 85% wegfiltert, und, was UV-Licht angeht, zu mindestens 95%.

13. Polymerisations- und Nachvergütungsgerät nach einem der vorhergehenden Ansprüche, **dadurch gekennzeichnet, dass** die Fensterscheibe (22) eine Breite von weniger als 50mm, bevorzugt etwa zwischen 30 und 40mm aufweist.

14. Polymerisations- und Nachvergütungsgerät nach einem der vorhergehenden Ansprüche, **dadurch gekennzeichnet, dass** der äußere Teil der Fensterscheibe (22), soweit er den Türschenkel (34) überlappt, von einer Blende (40) abgedeckt ist, die sich insbesondere über die gesamte Innenseite der Tür (14), abgesehen von einem Ausschnitt, der das Fenster (12) bildet, erstreckt.

15. Polymerisations- und Nachvergütungsgerät nach Anspruch 14 **dadurch gekennzeichnet, dass** die Blende (40) zum Innenraum (36) hin reflektierend ausgebildet ist und insbesondere aus Metall besteht.

## Claims

1. A polymerization and artificial post-aging apparatus for artificial aging, in particular for artificial post-aging of dental restoration parts made of polymerizable plastics, especially dental restoration parts produced by stereolithography, the apparatus comprising at least one light source which emits in the visible and/or ultraviolet wavelength ranges, and a light chamber which has at least one light source, and a door to the light chamber,
wherein at least one wall, in particular the door (14), includes a window (20) with a window pane (22) which consists of at least two layers, the layer (56) of which facing the light chamber (36) reflects at least 90%, especially about 95%, **characterized in that** layer (58) thereof facing away from the light chamber (36) filters out UV light and/or blue light.

2. The polymerization and artificial post-aging apparatus according to claim 1, **characterized in that** the window (20) has a height-to-width ratio of at least 2 to 1, preferably of about 4 to 1.

3. The polymerization and artificial post-aging apparatus according to one of the preceding claims, **characterized in that** the window (20) is mounted in a door leg (34) which shadows the light emission towards the outside, when viewed in the oblique direction.

4. The polymerization and artificial post-aging apparatus according to one of the preceding claims, **characterized in that** the window (20) is mounted centrally and deep-seated in the door (14), at a depth corresponding to at least 60% of the width of the window (20).

5. The polymerization and artificial post-aging apparatus according to one of the preceding claims, **characterized in that** the window (20) is substantially flush with the inside of the door (14).

6. The polymerization and artificial post-aging apparatus according to one of the preceding claims, **characterized in that** the window (20) is mounted on the door (14) using a light-tight seal and/or a labyrinth seal.

7. The polymerization and artificial post-aging apparatus according to one of the preceding claims, **characterized in that** a screen (42) on the door (14) is black colored or black coated on the inside.

8. The polymerization and artificial post-aging apparatus according to one of the preceding claims, **characterized in that** the layer (56) of the window pane (22) closer to the light chamber (36) reflects on one side, i.e. towards the light chamber (36).

9. The polymerization and artificial post-aging apparatus according to one of the preceding claims, **characterized in that** the window pane (22) consists of two layers (56, 58) which are applied directly to each other, i.e. without a separating air layer.

10. The polymerization and artificial post-aging apparatus according to one of the preceding claims, **characterized in that** the layer (58) facing away from the light chamber (36) consists of a plastic material which is transparent and forming an edge filter for UV light and/or blue light.

11. The polymerization and artificial post-aging apparatus according to one of the preceding claims, **characterized in that** the window pane (22), as seen both from the front side (32) of the door (14) and the inner side of the door (14), i.e. as seen from the light chamber (36), is recessed with respect to the door (14), and is more recessed at the front side (32) than at the inner side.

12. The polymerization and artificial post-aging apparatus according to one of the preceding claims, **characterized in that**, with the door (14) closed, the window pane (22) filters out at least 70%, preferably at least 85%, of the radiation emitted by the light source (38) as far as visible light is concerned, and at least 95% as far as UV light is concerned.

13. The polymerization and artificial post-aging apparatus according to one of the preceding claims, **characterized in that** the window pane (22) has a width of less than 50 mm, preferably between about 30 and 40 mm.

14. The polymerization and artificial post-aging apparatus according to one of the preceding claims, **characterized in that** the exterior portion of the window pane (22), as it overlaps the door leg (34), is covered by a screen (40) which especially extends across the entire inner side of the door (14), except a section forming the window (12).

15. The polymerization and artificial post-aging apparatus according to claim 14, **characterized in that** the cover (40) is designed to be reflective towards the interior (36) and is especially made of metal.

## Revendications

1. Dispositif de polymérisation et de traitement de finition pour le traitement, en particulier pour le traitement de finition, de pièces de restauration dentaire en matières plastiques polymérisables, en particulier de pièces de restauration dentaire fabriquées par stéréolithographie, avec au moins une source lumineuse qui émet dans le domaine des longueurs d'onde visibles et/ou ultraviolettes, et avec une chambre lumineuse qui présente au moins une source lumineuse, et avec une porte vers la chambre lumineuse, où au moins une paroi, en particulier la porte (14), présente une fenêtre (20) avec une vitre (22) qui se compose d'au moins deux couches, dont la couche (56) tournée vers la chambre lumineuse (36) réfléchit au moins 90%, en particulier environ 95%, **caractérisé en ce que** sa couche (58) opposée à la chambre lumineuse (36) filtre la lumière UV et/ou la lumière bleue.

2. Dispositif de polymérisation et de traitement de finition selon la revendication 1, **caractérisé en ce que** le rapport hauteur/largeur de la fenêtre (20) est au moins 2 à 1, de préférence d'environ 4 à 1.

3. Dispositif de polymérisation et de traitement de finition selon l'une des revendications précédentes, **caractérisé en ce que** la fenêtre (20) est montée dans un montant de porte (34) qui masque l'émission de lumière vers l'extérieur lorsqu'elle est vue en oblique.

4. Dispositif de polymérisation et de traitement de finition selon l'une des revendications précédentes, **caractérisé en ce que** la fenêtre (20) est montée de manière centrale et enfoncée dans la porte (14), à une profondeur qui correspond à au moins 60% de la largeur de la fenêtre (20).

5. Dispositif de polymérisation et de traitement de finition selon l'une des revendications précédentes, **caractérisé en ce que** la fenêtre (20) à l'intérieur est sensiblement en affleurement avec la porte (14).

6. Dispositif de polymérisation et de traitement de finition selon l'une des revendications précédentes, **caractérisé en ce que** la fenêtre (20) est montée sur la porte (14) avec un joint étanche à la lumière et/ou un joint à labyrinthe.

7. Dispositif de polymérisation et de traitement de finition selon l'une des revendications précédentes, **caractérisé en ce qu'**une cache (42) sur la porte (14) est teintée en noir ou revêtu de noir à l'intérieur.

8. Dispositif de polymérisation et de traitement de finition selon l'une des revendications précédentes, **caractérisé en ce que** la couche (56) de la vitre (22) plus proche de la chambre lumineuse (36) réfléchit sur un côté, c'est-à-dire vers la chambre lumineuse (36).

9. Dispositif de polymérisation et de traitement de finition selon l'une des revendications précédentes, **caractérisé en ce que** la vitre (22) est constituée de deux couches (56, 58) qui sont appliquées directement l'une sur l'autre, c'est-à-dire sans couche d'air de séparation.

10. Dispositif de polymérisation et de post-polymérisation selon l'une des revendications précédentes, **caractérisé en ce que** la couche (58) détournée de la chambre lumineuse (36) est constituée d'une matière plastique qui est transparente et qui forme un filtre périphérique pour la lumière UV et/ou la lumière bleue.

11. Dispositif de polymérisation et de traitement de finition selon l'une des revendications précédentes, **caractérisé en ce que** la vitre (22) est en retrait par rapport à la porte (14) à la fois lorsqu'elle est vue depuis la face avant (32) de la porte (14) et lorsqu'elle est vue depuis l'intérieur de la porte (14), c'est-à-dire lorsqu'elle est vue depuis la chambre lumineuse (36), davantage sur la face avant (32) que sur la face intérieure.

12. Dispositif de polymérisation et de traitement de finition selon l'une des revendications précédentes, **caractérisé en ce que**, lorsque la porte (14) est fermée, la vitre (22) filtre au moins 70%, de préférence au moins 85%, du rayonnement émis par la source lumineuse (38) en ce qui concerne la lumière visible, et au moins 95% en ce qui concerne la lumière UV.

13. Dispositif de polymérisation et de traitement de finition selon l'une des revendications précédentes, **caractérisé en ce que** la vitre (22) a une largeur inférieure à 50 mm, de préférence comprise entre environ 30 et 40 mm.

14. Dispositif de polymérisation et de traitement de finition selon l'une des revendications précédentes, **caractérisé en ce que** la partie extérieure de la vitre (22), dans la mesure où elle recouvre le montant de porte (34), est recouverte d'une cache (40) qui s'étend notamment sur toute la face intérieure de la porte (14), à l'exception d'une découpe, qui forme la fenêtre (12).

15. Dispositif de polymérisation et de traitement de finition selon la revendication 14, **caractérisé en ce que** la cache (40) est réfléchissante vers l'intérieur (36) et en particulier est en métal.
